# EUROPÄISCHE PATENTANMELDUNG

(11) **EP 4 717 358 A1**
(43) Veröffentlichungstag der Anmeldung: **01.04.2026**
(21) Anmeldenummer: 25204024.1
(22) Anmeldetag: 23.09.2025
(51) Int. Cl.: B01L 3/02

(54) **VERFAHREN ZUM DOSIEREN VON PROBENFLÜSSIGKEIT UND PIPETTE ZUM DOSIEREN VON PROBENFLÜSSIGKEIT**

(30) Priorität: 25.09.2024 DE 102024127704
(71) Anmelder: Festo SE & Co. KG, 73734 Esslingen (DE)
(72) Erfinder: Bochterle, Martin, 70734 Fellbach (DE); Patz, Heiko, 73235 Weilheim (DE)
(74) Vertreter: Patentanwälte Magenbauer & Kollegen Partnerschaft mbB

(57) **Zusammenfassung**

Die Erfindung betrifft ein Verfahren zum Dosieren einer Probenflüssigkeit, mit einer Pipette (200), die eine Arbeitsfluideinrichtung (260), eine Durchflusssensoranordnung (240), einen Pipettierspitzenhalter (210), eine mit Probenflüssigkeit befüllbare Pipettierspitze (220), einen am Pipettierspitzenhalter (210) angeordneten Spitzen-Drucksensor (230) und eine Steuereinrichtung (250) umfasst, mit den Schritten Auswerten eines Drucksignals des Spitzen-Drucksensors (230) mit der Steuereinrichtung (250), um einen Arbeitsfluid-Druck zu erhalten, Auswerten eines Durchflusssignals der Durchflusssensoranordnung (240) mit der Steuereinrichtung (250), um einen Probenflüssigkeits-Durchfluss zu erhalten, Verändern eines Druckes für im Pipettierspitzenhalter (210) aufgenommenes Arbeitsfluid mit der Arbeitsfluideinrichtung (260) gemäß einem ersten Verlauf für den Arbeitsfluid-Druck, so dass Probenflüssigkeit durch eine von dem Pipettierspitzenhalter (210) beabstandete Dosieröffnung der Pipettierspitze (220) tritt, Ermitteln eines Strömungswiderstandskennwertes für die Probenflüssigkeit unter Berücksichtigung des Arbeitsfluid-Druckes und des Probenflüssigkeits-Durchflusses, und anschließend erneutes Verändern des Druckes für im Pipettierspitzenhalter (210) aufgenommenes Arbeitsfluid mit der Arbeitsfluideinrichtung (260) gemäß einem zweiten Verlauf für den Arbeitsfluid-Druck (311).

## Beschreibung

Die Erfindung betrifft ein Verfahren zum Dosieren von Probenflüssigkeit und eine Pipette zum Dosieren von Probenflüssigkeit.

Aus dem Stand der Technik bekannte Pipetten zum Dosieren einer Probenflüssigkeit weisen beispielsweise eine Arbeitsfluideinrichtung, einen Pipettierspitzenhalter und eine mit Probenflüssigkeit befüllbare Pipettierspitze auf.

Die Pipettierspitze ist fluidisch mit dem Pipettierspitzenhalter verbunden. Mittels der Arbeitsfluideinrichtung kann ein Druck für im Pipettierspitzenhalter aufgenommenes Arbeitsfluid verändert werden, um in der Pipettierspitze aufgenommene Probenflüssigkeit aus der Pipettierspitze auszutragen, das heißt, zu dispensieren, oder in diese aufzunehmen, das heißt, zu aspirieren. Zum Austragen oder Abgeben von Probenflüssigkeit aus der Pipettierspitze wird mittels der Arbeitsfluideinrichtung der Druck für im Pipettierspitzenhalter aufgenommenes Arbeitsfluid erhöht, zum Aufnehmen oder Einführen von Probenflüssigkeit in die Pipettierspitze wird dieser Druck verringert, sodass eine entsprechende Sogwirkung resultiert.

Die Veränderung des Druckes kann auf verschiedene Weise erreicht werden. Beispielsweise existieren sogenannte Kolbenpipetten, bei denen die Arbeitsfluideinrichtung einen Zylinder und einen in dem Zylinder aufgenommenen Kolben aufweist. An dem Kolben ist eine Kolbenstange angeordnet, mittels der eine Bewegung des Kolbens in dem Zylinder hervorgerufen werden kann. Eine solche Bewegung führt zu einer Veränderung eines Volumens eines vom Kolben in dem Zylinder begrenzten Kolbenraumes. In diesem Kolbenraum ist Arbeitsfluid, insbesondere ein Gas, aufgenommen, das der Volumenänderung und damit der Bewegung des Kolbens folgend entweder expandiert, wodurch der Druck reduziert wird, um Probenflüssigkeit zu aspirieren, oder verdichtet wird, wodurch der Druck erhöht wird, um Probenflüssigkeit zu dispensieren.

Zudem existieren Pipetten, bei denen die Arbeitsfluideinrichtung eine Überdruckquelle aufweist, die bei Bedarf, das heißt, wenn Probenflüssigkeit dispensiert werden soll, fluidisch mit dem Pipettierspitzenhalter verbunden wird, sodass der Druck für im Pipettierspitzenhalter aufgenommenes Arbeitsfluid erhöht wird. Auf diese Weise kann bei solchen Pipetten, die als sogenannte Air-Lock-Pipetten oder gasdurchflusssensorgesteuerte Pipetten ausgebildet sein können, dispensiert werden. Um bei einer solchen Pipette ein Aspirieren zu ermöglichen, kann zudem eine Unterdruckquelle vorgesehen sein, die dann fluidisch mit dem Pipettierspitzenhalter verbunden ist beziehungsweise bei Bedarf mit dem Pipettierspitzenhalter verbunden werden kann, sodass der Druck für im Pipettierspitzenhalter aufgenommenes Arbeitsfluid verringert wird. Die fluidische Verbindung zwischen dem Pipettierspitzenhalter und der Überdruckquelle oder der Unterdruckquelle kann mittels Ventilen geschaltet werden. Beispielsweise kann ein entsprechend angeordnetes Ventil in eine Offenstellung versetzt werden, um die betreffende fluidische Verbindung herzustellen, oder in eine Schließstellung versetzt werden, um die betreffende fluidische Verbindung zu beenden.

Es sind Pipetten bekannt, bei denen die Überdruckquelle und gegebenenfalls die Unterdruckquelle außerhalb des Grundkörpers der Pipette angeordnet sind.

Aufgabe der vorliegenden Erfindung ist es, ein Verfahren zum Dosieren einer Probenflüssigkeit und eine Pipette zum Dosieren einer Probenflüssigkeit bereitzustellen, die eine hohe Genauigkeit bei der Durchführung des Dosiervorgangs aufweisen.

Diese Aufgabe wird durch ein Verfahren zum Dosieren einer Probenflüssigkeit mit einer Pipette, die eine Arbeitsfluideinrichtung, eine Durchflusssensoranordnung, einen Pipettierspitzenhalter, eine mit Probenflüssigkeit befüllbare Pipettierspitze, einen am Pipettierspitzenhalter angeordneten Spitzen-Drucksensor und eine Steuereinrichtung umfasst, mit den nachstehend angeführten Schritten gelöst:
Auswerten eines Drucksignals des Spitzen-Drucksensors mit der Steuereinrichtung, um einen Arbeitsfluid-Druck zu erhalten, Auswerten eines Durchflusssignals der Durchflusssensoranordnung mit der Steuereinrichtung, um einen Probenflüssigkeits-Durchfluss zu erhalten, Verändern eines Druckes für im Pipettierspitzenhalter aufgenommenes Arbeitsfluid mit der Arbeitsfluideinrichtung gemäß einem, insbesondere von der Steuereinrichtung vorgegebenen, ersten Verlauf für den Arbeitsfluid-Druck, so dass Probenflüssigkeit durch eine von dem Pipettierspitzenhalter beabstandete Dosieröffnung der Pipettierspitze tritt, Ermitteln eines Strömungswiderstandskennwertes für die Probenflüssigkeit unter Berücksichtigung des Arbeitsfluid-Druckes und des Probenflüssigkeits-Durchflusses, und anschließend erneutes Verändern des Druckes für im Pipettierspitzenhalter aufgenommenes Arbeitsfluid mit der Arbeitsfluideinrichtung gemäß einem, insbesondere von der Steuereinrichtung vorgegebenen, zweiten Verlauf für den Arbeitsfluid-Druck, wobei der zweite Verlauf für den Arbeitsfluid-Druck unter Berücksichtigung des Strömungswiderstandskennwertes ermittelt wird, so dass eine vorgegebene Probenflüssigkeitsmenge durch die Dosieröffnung tritt.

Erfindungsgemäß ist es vorgesehen, das vorstehende Verfahren mit einer Pipette auszuführen, bei der die Pipettierspitze von dem Pipettierspitzenhalter entfernt werden kann und durch eine andere, insbesondere vorher nicht verwendete oder nach einer Verwendung zumindest gereinigte, Pipettierspitze ersetzt werden kann. Zudem ist es erfindungsgemäß vorgesehen, dass Probenflüssigkeit lediglich mit der austauschbaren Pipettierspitze in Kontakt kommt, nicht aber mit dem Pipettierspitzenhalter.

Hierzu ist die Pipettierspitze vorzugsweise so ausgebildet, dass die in die Pipette aufzunehmende Menge an Probenflüssigkeit vollständig in die Pipettierspitze aufnehmbar ist. Gängige Innenvolumen solcher Pipettierspitzen reichen von 10 Mikroliter bis 10.000 Mikroliter und insbesondere von 20 Mikroliter bis 2.000 Mikroliter. Ein gängiges Innenvolumen eines entsprechenden Pipettierspitzenhalters reicht von 20 Mikroliter bis 5.000 Mikroliter, bevorzugt von 50 Mikroliter bis 1.000 Mikroliter, besonders bevorzugt von 150 Mikroliter bis 800 Mikroliter.

Auf diese Weise kann es verhindert werden, dass der Pipettierspitzenhalter nach einem Dosieren von Probenflüssigkeit aufwendig gereinigt werden muss. Dies ist insbesondere bei Probenflüssigkeiten von Vorteil, die eine kontaminierende Wirkung aufweisen, beispielsweise bei biologischen oder medizinischen Probenflüssigkeiten, wie Blut. Insbesondere ist die Pipettierspitze als Einweg- oder Wegwerfartikel ausgebildet.

Die Pipettierspitze kann leer sein, bevor sie mit dem Pipettierspitzenhalter gekoppelt wird, um dann mit Probenflüssigkeit befüllt zu werden, wenn sie mit dem Pipettierspitzenhalter gekoppelt ist.

Wenn die Pipettierspitze mit dem Pipettierspitzenhalter gekoppelt ist, besteht zwischen dem Pipettierspitzenhalter und der Pipettierspitze eine fluidische Verbindung. Das bedeutet, dass Fluid, insbesondere Arbeitsfluid, aus dem Pipettierspitzenhalter in die Pipettierspitze eintreten kann und anders herum aus der Pipettierspitze in den Pipettierspitzenhalter eintreten kann. Tritt Arbeitsfluid in die Pipettierspitze ein, kann in der Pipettierspitze aufgenommene Probenflüssigkeit aus der Pipettierspitze abgegeben, also dispensiert werden. Tritt Arbeitsfluid aus der Pipettierspitze in den Pipettierspitzenhalter ein, kann Probenflüssigkeit in die Pipettierspitze aufgenommen werden, also aspiriert werden.

Die Veränderung beziehungsweise der Verlauf des Druckes für im Pipettierspitzenhalter aufgenommenes Arbeitsfluid kann ein Anhaltspunkt dafür sein, wie viel Probenflüssigkeit in die Pipettierspitze aspiriert wird beziehungsweise aus dieser dispensiert wird und wie schnell das Aspirieren beziehungsweise Dispensieren geschieht. Um die Veränderung des Druckes für im Pipettierspitzenhalter aufgenommenes Arbeitsfluid zu erfassen, ist der Spitzen-Drucksensor vorgesehen.

Auch der Probenflüssigkeits-Durchfluss kann ein Anhaltspunkt dafür sein, wie viel Probenflüssigkeit in die Pipettierspitze aspiriert wird beziehungsweise aus dieser dispensiert wird und wie schnell das Aspirieren beziehungsweise Dispensieren geschieht. Um den Probenflüssigkeits-Durchfluss zu erfassen, ist die Durchflusssensoranordnung vorgesehen. Der Probenflüssigkeits-Durchfluss kann ein Volumenstrom an Probenflüssigkeit oder ein Massenstrom an Probenflüssigkeit sein. Des Weiteren kann der Probenflüssigkeits-Durchfluss eine Strömungsgeschwindigkeit der Probenflüssigkeit sein. Zudem kann der Probenflüssigkeits-Durchfluss ein Volumen an Probenflüssigkeit sein, das in einer bestimmten Zeitspanne in die Pipettierspitze aspiriert oder aus dieser dispensiert wurde oder eine entsprechende Masse an Probenflüssigkeit. In entsprechender Weise ist die Durchflusssensoranordnung dazu eingerichtet, einen Volumenstrom, einen Massenstrom, eine Strömungsgeschwindigkeit, ein Volumen und/oder eine Masse zu erfassen.

Die Durchflusssensoranordnung kann einen Sensor aufweisen, mit dem der Probenflüssigkeits-Durchfluss direkt gemessen werden kann, beispielsweise einen Volumenstromsensor oder einen Massenstromsensor. Zudem kann die Durchflusssensoranordnung einen Sensor aufweisen, mit dem der Probenflüssigkeits-Durchfluss indirekt gemessen werden kann. Ein solcher Sensor zur indirekten Messung wird auch als Softsensor bezeichnet.

Um Probenflüssigkeit durch die Dosieröffnung der Pipettierspitze in diese zu aspirieren beziehungsweise aus dieser zu dispensieren, wird der Druck für im Pipettierspitzenhalter aufgenommenes Arbeitsfluid verändert. Dieses Verändern erfolgt gemäß dem ersten Verlauf für den Arbeitsfluid-Druck beziehungsweise beim erneuten Verändern gemäß dem zweiten Verlauf für den Arbeitsfluid-Druck. Der erste und der zweite Verlauf für den Arbeitsfluid-Druck sind jeweils Verläufe von Sollwerten für den Arbeitsfluid-Druck, auf deren Grundlage mit der Arbeitsfluideinrichtung die tatsächliche Veränderung des Druckes für im Pipettierspitzenhalter aufgenommenes Arbeitsfluid vorgenommen wird.

Zwischen dem erstmaligen Verändern des Druckes für im Pipettierspitzenhalter aufgenommenes Arbeitsfluid und dem diesbezüglichen erneuten Verändern wird der Strömungswiderstandskennwert für die Probenflüssigkeit ermittelt. Dabei werden der während des erstmaligen Veränderns des Druckes für im Pipettierspitzenhalter aufgenommenes Arbeitsfluid ermittelte Arbeitsfluid-Druck und der diesbezügliche Probenflüssigkeits-Durchfluss berücksichtigt. Vorzugsweise wird der Strömungswiderstandskennwert mittels eines modellbasierten Beobachters ermittelt und in einem modellbasierten Regler berücksichtigt. Hierbei kann durch eine Veränderung des Strömungswiderstandskennwertes die Beziehung zwischen dem Arbeitsfluid-Druck und dem Probenflüssigkeits-Durchfluss ermittelt werden.

Der Strömungswiderstandskennwert hängt zudem von intrinsischen Eigenschaften der Probenflüssigkeit ab. Beispielsweise kann der Strömungswiderstandskennwert von der kinematischen Viskosität der Probenflüssigkeit und/oder deren Dichte abhängig sein. Des Weiteren kann der Strömungswiderstandskennwert von Eigenschaften abhängen, die in Zusammenhang mit der Pipette stehen, insbesondere von geometrischen Eigenschaften mit Bezug zu einer Innengeometrie der Pipettierspitze, beispielsweise von einem Innenquerschnitt der Pipettierspitze und/oder einem Verlauf eines solchen Innenquerschnittes. Rein exemplarisch ist der Strömungswiderstandskennwert abhängig von der kinematischen Viskosität der Probenflüssigkeit, der Dichte der Probenflüssigkeit und geometrischen Eigenschaften der Pipettierspitze. Wurde der Strömungswiderstandskennwert ermittelt und sind beispielsweise die geometrischen Eigenschaften der Pipettierspitze und die Dichte der Probenflüssigkeit bekannt, kann von dem Strömungswiderstandskennwert auf die kinematische Viskosität der Probenflüssigkeit geschlossen werden.

Der zweite Verlauf für den Arbeitsfluid-Druck wird unter Berücksichtigung des Strömungswiderstandskennwertes ermittelt. Unter Berücksichtigung ist in diesem Zusammenhang zu verstehen, dass der Strömungswiderstandskennwert den zweiten Verlauf für den Arbeitsfluid-Druck beeinflusst. Dementsprechend wird der zweite Verlauf für den Arbeitsfluid-Druck von dem jeweils während dem erstmaligen Verändern des Druckes für im Pipettierspitzenhalter aufgenommenes Arbeitsfluid erfassten Arbeitsfluid-Druck und Probenflüssigkeits-Durchfluss beeinflusst. Das erstmalige Verändern des Druckes für im Pipettierspitzenhalter aufgenommenes Arbeitsfluid kann somit als eine Art Probeschuss betrachtet werden, bei dem Kenntnisse zu der zu dosierenden Probenflüssigkeit erlangt werden. Diese Kenntnisse werden dann bei dem erneuten Verändern des Druckes für im Pipettierspitzenhalter aufgenommenes Arbeitsfluid berücksichtigt, um mit hoher Genauigkeit eine vorgegebene Probenflüssigkeitsmenge zu dosieren.

Beispielsweise kann das erstmalige Verändern des Druckes für im Pipettierspitzenhalter aufgenommenes Arbeitsfluid als Aspirieren von Probenflüssigkeit, beispielsweise aus einem Probenflüssigkeitsreservoir, erfolgen und das erneute Verändern des Druckes für im Pipettierspitzenhalter aufgenommenes Arbeitsfluid als Dispensieren der zuvor aspirierten Probenflüssigkeit, beispielsweise in ein Probengefäß. Vorzugsweise wird das erneute Verändern des Druckes für im Pipettierspitzenhalter aufgenommenes Arbeitsfluid mit der gleichen Probenflüssigkeit mehrfach hintereinander als Dispensieren durchgeführt. So kann beispielsweise die gleiche Probenflüssigkeit mehrfach hintereinander in verschiedene Probengefäße dispensiert werden, ohne dass jedes Mal zuvor der Strömungswiderstandskennwert erneut ermittelt werden muss.

Wenn verschiedene Probenflüssigkeiten unabhängig von deren Strömungswiderstandskennwert jeweils mit demselben Arbeitsfluid-Druckverlauf dispensiert werden würden, dann würden dünnflüssige Probenflüssigkeiten so schnell dispensiert werden, dass sie beim Auftreffen in ein Probengefäß unkontrolliert herumspritzen. Dickflüssigere Probenflüssigkeiten dahingegen würden so langsam dispensiert werden, dass diese zum Ende des Dispensiervorgangs nicht genügend stark abgebremst beziehungsweise verzögert werden können, sodass ein letzter Tropfen der Probenflüssigkeitsmenge an der Pipettierspitze hängen beziehungsweise haften bleibt und nicht vollständig von der Pipettierspitze abgegeben wird. In beiden Fällen, das heißt bei den dünnflüssigen Probenflüssigkeiten und bei den dickflüssigen Probenflüssigkeiten würde die Probenflüssigkeitsmenge, die im Probengefäß ankommt, nicht der vorgegebenen Probenflüssigkeitsmenge entsprechen.

Indem erfindungsgemäß der zweite Verlauf für den Arbeitsfluid-Druck unter Berücksichtigung des Strömungswiderstandskennwertes ermittelt wird, können die vorgenannten Risiken reduziert werden.

Bevorzugt wird der Druck für im Pipettierspitzenhalter aufgenommenes Arbeitsfluid mit der Arbeitsfluideinrichtung gemäß einem zweiten Verlauf für den Arbeitsfluid-Druck erneut verändert, so dass eine vorgegebene Probenflüssigkeitsmenge mit einem vorgegebenen Verlauf des Probenflüssigkeits-Durchflusses durch die Dosieröffnung tritt. Exemplarisch ist vorgesehen, dass der vorgegebene Verlauf des Probenflüssigkeits-Durchflusses ein vorgegebener Verlauf der Strömungsgeschwindigkeit der Probenflüssigkeit ist. Hierbei kann der Verlauf der Strömungsgeschwindigkeit der Probenflüssigkeit so vorgegeben werden, dass am Ende des Dispensierens die Strömungsgeschwindigkeit im erforderlichen Maße verzögert wird und/oder dass die Probenflüssigkeit nicht zu schnell aus der Pipettierspitze austritt. Auf diese Weise kann der unmittelbar vor dem Ende des Dispensierens in der Pipettierspitze verbleibende Rest der Probenflüssigkeitsmenge so schnell abgebremst werden, dass auch der letzte Tropfen der Probenflüssigkeitsmenge sicher bei gleichbleibender Geschwindigkeit abreißt.

Vorzugsweise erfolgt das erneute Verändern des Druckes für im Pipettierspitzenhalter aufgenommenes Arbeitsfluid geregelt. Hierzu wird der zweite Verlauf für den Arbeitsfluid-Druck als eine Führungsgröße verwendet und der mittels Auswerten des Drucksignals des Spitzen-Drucksensors mit der Steuereinrichtung erhaltene Arbeitsfluid-Druck als eine Regelgröße verwendet, die zu der Führungsgröße rückgeführt wird. Die Differenz aus der Führungsgröße und der rückgeführten Regelgröße wird als eine Regelabweichung verwendet und dem Regler zugeführt, der das Regelungsgesetz umsetzt. Insbesondere ist der Regler als Software ausgebildet. Durch die Regelung kann der Einfluss von Störgrößen auf den Arbeitsfluid-Druck kompensiert werden. Alternativ erfolgt das erneute Verändern des Druckes für im Pipettierspitzenhalter aufgenommenes Arbeitsfluid gesteuert. Auch das erstmalige Verändern des Druckes für im Pipettierspitzenhalter aufgenommenes Arbeitsfluid erfolgt vorzugsweise geregelt und alternativ gesteuert.

Vorzugsweise ist die Durchflusssensoranordnung als Softsensor-Anordnung ausgebildet und ermittelt die Durchflusssensoranordnung das Durchflusssignal auf Grundlage zumindest eines Drucksignals eines der Arbeitsfluideinrichtung zugeordneten Drucksensors. Bei der als Softsensor-Anordnung ausgebildeten Durchflusssensoranordnung wird das Durchflusssignal nicht direkt mit der Durchflusssensoranordnung gemessen, sondern es wird ein Signal einer anderen physikalischen Größe erfasst - hier ein Drucksignal - auf dessen Grundlage das Durchflusssignal berechnet wird. Dabei wird das Durchflusssignal wie ein direkt erfasstes Messsignal verwendet, obwohl es ein indirekt erfasstes, lediglich berechnetes Signal ist. Indem die Durchflusssensoranordnung als Softsensor-Anordnung ausgebildet ist, können statt teurer oder lediglich aufwendig implementierbarer direkt messender Sensoren, wie ein Volumenstromsensor, günstige und gegebenenfalls einfach implementierbare Sensoren, wie hier ein Drucksensor, verwendet werden.

Vorzugsweise weist die Arbeitsfluideinrichtung eine Überdruckquelle und/oder eine Unterdruckquelle auf, wobei ein der Überdruckquelle zugeordneter Überdrucksensor und/oder ein der Unterdruckquelle zugeordneter Unterdrucksensor vorgesehen sind, wobei die Durchflusssensoranordnung das Durchflusssignal auf Grundlage eines Drucksignals des Überdrucksensors und/oder eines Drucksignals des Unterdrucksensors und des Drucksignals des Spitzen-Drucksensors ermittelt. Eine auf diese Weise ausgebildete Pipette wird auch als Air-Lock-Pipette bezeichnet. Um zu dosieren, wird mittels eines Ventils eine fluidische Verbindung zwischen der betreffenden Druckquelle und dem Pipettierspitzenhalter hergestellt. Hierdurch wird ein Druckausgleich zwischen der Druckquelle und dem Pipettierspitzenhalter erzeugt.

Ist der Pipettierspitzenhalter fluidisch mit der Überdruckquelle verbunden, wird in dem Pipettierspitzenhalter ein Überdruck ausgebildet, sodass in der Pipettierspitze aufgenommene Probenflüssigkeit dispensiert werden kann. Ist der Pipettierspitzenhalter fluidisch mit der Unterdruckquelle verbunden, wird in dem Pipettierspitzenhalter ein Unterdruck ausgebildet, sodass in der Pipettierspitze aufgenommene Probenflüssigkeit aspiriert werden kann. Der Druckausgleich wird dadurch erreicht, dass das Ventil in eine Offenstellung versetzt wird.

Ferner vorzugsweise ist vorgesehen, dass das Ventil als Proportionalventil ausgebildet ist, sodass je nach Stärke beziehungsweise Geschwindigkeit des erforderlichen Druckausgleiches ein unterschiedlicher Öffnungsgrad des Proportionalventils eingestellt wird. Ist beispielsweise ein starker beziehungsweise schneller Druckausgleich erforderlich, wird das Ventil weiter geöffnet, als wenn ein schwacher beziehungsweise langsamer Druckausgleich erforderlich ist.

Besonders bevorzugt weist die Arbeitsfluideinrichtung eine Überdruckquelle und eine Unterdruckquelle auf, wobei ein der Überdruckquelle zugeordneter Überdrucksensor und ein der Unterdruckquelle zugeordneter Unterdrucksensor vorgesehen sind, wobei die Durchflusssensoranordnung das Durchflusssignal auf Grundlage eines Drucksignals des Überdrucksensors und eines Drucksignals des Unterdrucksensors ermittelt. Eine auf diese Weise ausgebildete Pipette wird auch als Dual-Air-Lock-Pipette oder gasdurchflusssensorgesteuerte Pipette bezeichnet. Mit einer solchen Pipette kann einfach Probenflüssigkeit dispensiert und aspiriert werden.

Alternativ oder in Ergänzung weist die Arbeitsfluideinrichtung einen Kolben auf und ist der Pipettierspitzenhalter als Zylinder ausgebildet, in dem der Kolben geführt ist, wobei die Durchflusssensoranordnung als Softsensor-Anordnung ausgebildet ist und das Durchflusssignal auf Grundlage eines Wegsignals eines dem Kolben zugeordneten Wegsensors und des Drucksignals des Spitzen-Drucksensors ermittelt. Ein solcher Wegsensor wird auch als Positionssensor bezeichnet. Rein exemplarisch wird das Durchflusssignal auf Grundlage des Wegsignals des dem Kolben zugeordneten Wegsensors und des Drucksignals des Spitzen-Drucksensors ermittelt. Eine auf die vorstehend beschriebene Weise ausgebildete Pipette wird als Kolbenpipette bezeichnet. Das vorstehend im Zusammenhang mit dem Überdrucksensor und dem Unterdrucksensor in Hinblick auf die Softsensor-Anordnung Beschriebene gilt im Zusammenhang mit dem Wegsensor in gleicher Weise.

Der Wegsensor ist dazu eingerichtet, eine Position des Kolbens in dem Zylinder zu erfassen. Wird der Kolben in dem Zylinder bewegt, verändert sich ein Volumen eines vom Kolben in dem Zylinder begrenzten Kolbenraumes. In diesem Kolbenraum ist Arbeitsfluid aufgenommen, das der Volumenänderung folgend entweder expandiert, wodurch der Druck reduziert wird, oder verdichtet wird, wodurch der Druck erhöht wird. Insofern kann von der Position des Kolbens in dem Zylinder, das heißt von dem Wegsignal des Wegsensors, auf ein Volumen beziehungsweise eine Volumenänderung in dem Kolbenraum geschlossen werden.

Vorzugsweise wird bei dem Ermitteln des Strömungswiderstandskennwertes eine simulierte Regelung durchgeführt, bei der der Arbeitsfluid-Druck als Eingang und der Probenflüssigkeits-Durchfluss als Führungsgröße verwendet werden und wird mittels einer Simulation ein simulierter Probenflüssigkeits-Durchfluss ermittelt, wobei der simulierte Probenflüssigkeits-Durchfluss als eine Regelgröße der simulierten Regelung verwendet wird. Eine solche Ermittlung des Strömungswiderstandskennwertes kann als sogenannte modellbasierte Beobachtung bezeichnet werden. Rein exemplarisch wird der simulierte Probenflüssigkeits-Durchfluss mit dem Probenflüssigkeits-Durchfluss verglichen, und wird der aus dem Vergleich resultierende Regelfehler dazu verwendet, bei der simulierten Regelung den Strömungswiderstandskennwert derart anzupassen, dass der als Führungsgröße verwendete Probenflüssigkeits-Durchfluss und der als Regelgröße verwendete simulierte Probenflüssigkeits-Durchfluss identisch werden.

Alternativ kann bei der bei dem Ermitteln des Strömungswiderstandskennwertes durchgeführten simulierten Regelung der Probenflüssigkeits-Durchfluss als Eingang und der Arbeitsfluid-Druck als Führungsgröße verwendet werden. Das vorstehend in Bezug auf den Eingang und die Führungsgröße Genannte gilt für die alternative umgekehrte Verwendung des Probenflüssigkeits-Durchflusses als Eingang und des Arbeitsfluid-Druckes als Führungsgröße in gleicher Weise.

Vorzugsweise wird bei der simulierten Regelung ein Zusammenhang zwischen dem Arbeitsfluid-Druck und dem Probenflüssigkeits-Durchfluss simuliert, wobei der Zusammenhang zwischen dem Arbeitsfluid-Druck und dem Probenflüssigkeits-Durchfluss in dem Strömungswiderstandskennwert widergespiegelt wird.

Vorzugsweise wird der Probenflüssigkeits-Durchfluss als eine Führungsgröße der simulierten Regelung verwendet, wobei der simulierte Probenflüssigkeits-Durchfluss als eine Messgröße der simulierten Regelung verwendet wird, die zu dem als eine Führungsgröße der simulierten Regelung verwendeten Probenflüssigkeits-Durchfluss rückgeführt wird.

Vorzugsweise wird eine Regelabweichung der simulierten Regelung als eine Differenz zwischen dem als eine Führungsgröße der simulierten Regelung verwendeten Probenflüssigkeits-Durchfluss und dem als eine Messgröße der simulierten Regelung verwendeten simulierten Probenflüssigkeits-Durchfluss ermittelt, wobei die Regelabweichung der simulierten Regelung einem Störmodell der simulierten Regelung zugeführt wird, wobei das Störmodell der simulierten Regelung als Funktion ausgebildet ist, mit der ein Vorab-Strömungswiderstandskennwert ermittelt wird, wobei der Vorab-Strömungswiderstandskennwert als ein Parameter der simulierten Regelung verwendet wird, wobei vorzugsweise der Arbeitsfluid-Druck der Simulation als eine Eingangsgröße zugeführt wird.

Ferner vorzugsweise wird die Regelabweichung, bevor diese dem Störmodell zugeführt wird, einem Regler der simulierten Regelung zugeführt und gemäß einer Verstärkungsfunktion verstärkt. Hierdurch kann die Dynamik der Regelung erhöht werden.

Eine erfindungsgemäße Pipette zum Dosieren einer Probenflüssigkeit weist eine Arbeitsfluideinrichtung, eine Durchflusssensoranordnung, einen Pipettierspitzenhalter, eine mit Probenflüssigkeit befüllbare Pipettierspitze, einen am Pipettierspitzenhalter angeordneten Spitzen-Drucksensor und eine Steuereinrichtung auf, wobei die Steuereinrichtung dazu eingerichtet ist, ein vorstehend beschriebenes Verfahren auszuführen.

Nachfolgend wird die Erfindung anhand der beiliegenden Zeichnung näher erläutert und in dieser zeigen
- Fig. 1: eine Pipette zum Dosieren einer Probenflüssigkeit mit einer Überdruckquelle und einer Unterdruckquelle,
- Fig. 2: eine weitere Pipette zum Dosieren einer Probenflüssigkeit mit einem Kolben und einem als Zylinder ausgebildeten Pipettierspitzenhalter,
- Fig. 3: ein Detail einer Pipette mit wenig in der Pipettierspitze aufgenommenem Probenfluid,
- Fig. 4: das in Fig. 3 dargestellte Detail mit viel in der Pipettierspitze aufgenommenem Probenfluid,
- Fig. 5: ein Verfahren zum Dosieren einer Probenflüssigkeit, und
- Fig. 6: einen modellbasierten Beobachter.

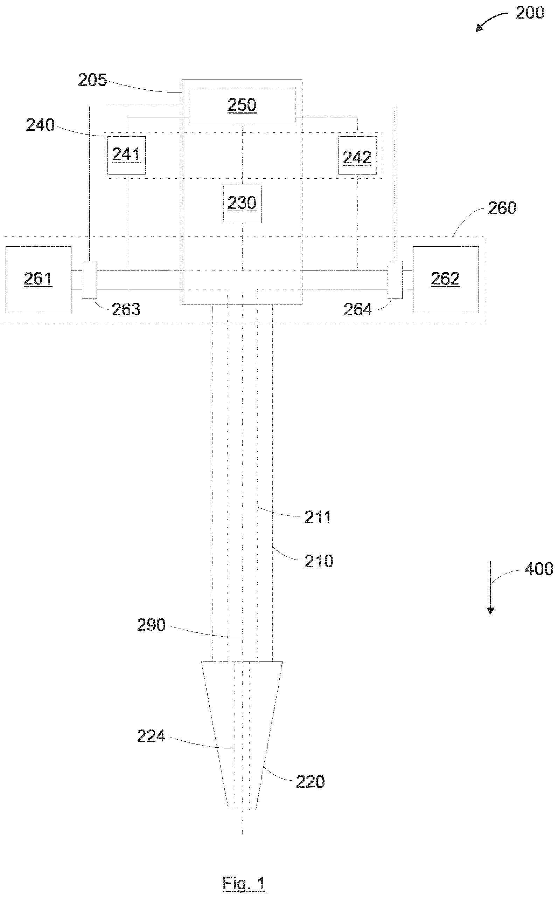

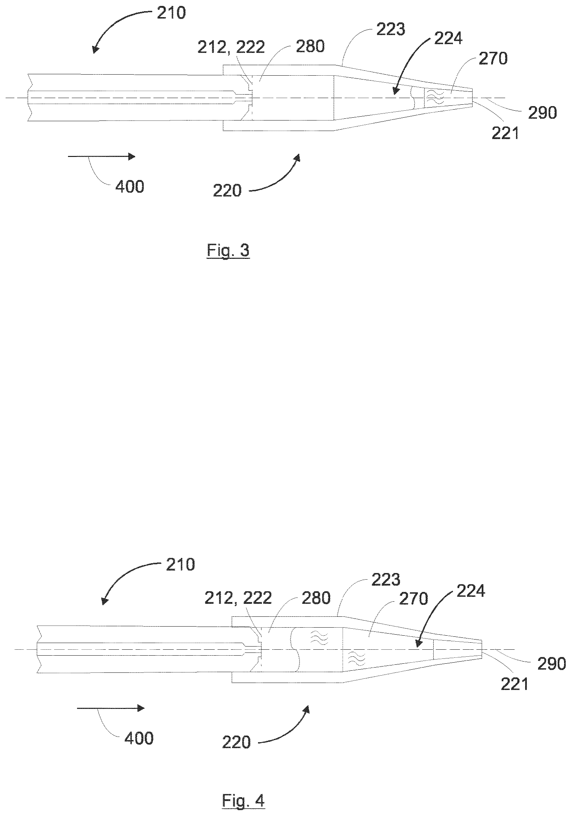

Fig. 1 zeigt eine Pipette 200 zum Dosieren einer Probenflüssigkeit 270 (vgl. Fig. 3 und 4). Die Pipette 200 weist eine Arbeitsfluideinrichtung 260, eine Durchflusssensoranordnung 240, einen Pipettierspitzenhalter 210, eine mit Probenflüssigkeit 270 befüllbare Pipettierspitze 220, einem am Pipettierspitzenhalter 210 angeordneten Spitzen-Drucksensor 230 und einer Steuereinrichtung 250 auf.

Der Pipettierspitzenhalter 210 weist einen Fluidkanal 211 auf, der sich mit seiner größten Ausdehnung entlang einer Mittelachse 290 erstreckt. Die Pipettierspitze 220 weist einen Innenbereich 224 auf, der fluidisch mit dem Fluidkanal 210 verbunden ist. In dem Fluidkanal 210 ist Arbeitsfluid 280 aufgenommen (vgl. Fig. 3 und 4).

Rein exemplarisch weist die Pipette 200 ein Kopfteil 205 auf, in dem ferner exemplarisch die Steuereinrichtung 250 und der Spitzen-Drucksensor 230 angeordnet sind. Der Spitzen-Drucksensor 230 ist elektrisch mit der Steuereinrichtung 250 und fluidisch mit dem Fluidkanal 211 verbunden. Weiter exemplarisch ist das Kopfteil 205 entlang einer parallel zu der Mittelachse 290 verlaufenden Längsrichtung 400 vor dem Pipettierspitzenhalter 210 angeordnet, der wiederum entlang der Längsrichtung 400 vor der Pipettierspitze 220 angeordnet ist.

Rein exemplarisch weist die Arbeitsfluideinrichtung 260 eine Überdruckquelle 261 und eine Unterdruckquelle 262 auf. Ferner exemplarisch weist die Durchflusssensoranordnung 240 einen der Überdruckquelle 261 zugeordneten Überdrucksensor 241 und einen der Unterdruckquelle 262 zugeordneten Unterdrucksensor 242 auf. Bei dieser Ausführungsform ist vorgesehen, dass die Durchflusssensoranordnung 240 ein Durchflusssignal auf Grundlage eines Drucksignals des Überdrucksensors 241 und/oder eines Drucksignals des Unterdrucksensors 242 und eines Drucksignals des Spitzen-Drucksensors 230 ermittelt.

Rein exemplarisch sind ein der Überdruckquelle 261 zugeordnetes erstes Ventil 263 und ein der Unterdruckquelle 262 zugeordnetes zweites Ventil 264 vorgesehen. Das erste Ventil 263 und das zweite Ventil 264 können in eine Offenstellung und in eine Schließstellung versetzt werden. Das erste Ventil 263 ist dazu eingerichtet, eine fluidische Verbindung zwischen der Überdruckquelle 261 und dem Pipettierspitzenhalter 210, insbesondere dem Fluidkanal 211, herzustellen, wenn das erste Ventil 263 in die Offenstellung versetzt ist, und die fluidische Verbindung zwischen der Überdruckquelle 261 und dem Pipettierspitzenhalter 210, insbesondere dem Fluidkanal 211, zu beenden, wenn das erste Ventil 263 in die Schließstellung versetzt ist.

In gleicher Weise ist das zweite Ventil 264 dazu eingerichtet, in der Offenstellung eine fluidische Verbindung zwischen der Unterdruckquelle 262 und dem Pipettierspitzenhalter 210, insbesondere dem Fluidkanal 211, herzustellen, wenn das zweite Ventil 264 in die Offenstellung versetzt ist, und die fluidische Verbindung zwischen der Unterdruckquelle 262 und dem Pipettierspitzenhalter 210, insbesondere dem Fluidkanal 211, zu beenden, wenn das zweite Ventil 264 in die Schließstellung versetzt ist. Ferner exemplarisch sind das erste Ventil 263 und das zweite Ventil 264 elektrisch mit der Steuereinrichtung 250 verbunden und ist die Steuereinrichtung 250 dazu eingerichtet, das erste Ventil 263 und das zweite Ventil 264 jeweils in die Offenstellung und in die Schließstellung zu versetzen.

Rein exemplarisch sind die Überdruckquelle 261 und die Unterdruckquelle 262 außerhalb des Kopfteils 205 angeordnet. Alternativ können die Überdruckquelle 261 und die Unterdruckquelle 262 innerhalb des Kopfteils 205 angeordnet sein.

Die in Fig. 1 dargestellte Pipette 200 wird auch als Dual-Air-Lock-Pipette bezeichnet.

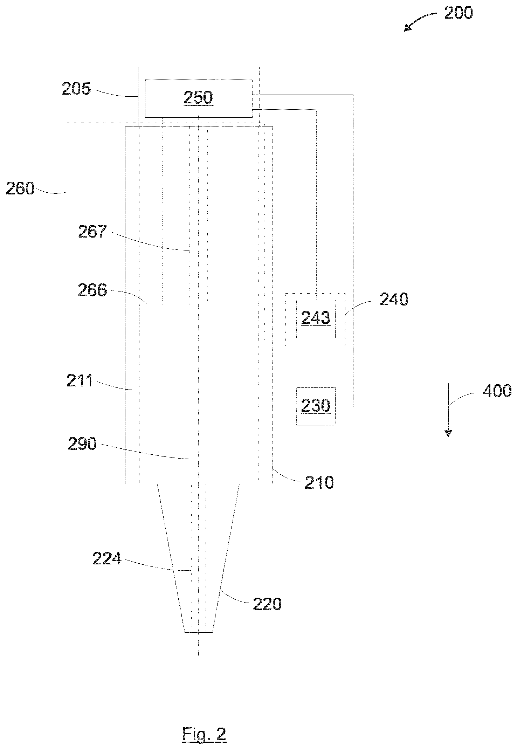

Fig. 2 zeigt eine weitere Pipette 200 zum Dosieren von Probenflüssigkeit 280. Die in Fig. 2 dargestellte Pipette 200 unterscheidet sich von der in Fig. 1 dargestellten Pipette 200 in Hinblick auf die Durchflusssensoranordnung 240 und die Arbeitsfluideinrichtung 260. Die Arbeitsfluideinrichtung 260 der in Fig. 2 dargestellten Pipette 200 weist einen Kolben 266 auf. Rein exemplarisch ist an dem Kolben 266 eine Kolbenstange 267 angeordnet. Der Pipettierspitzenhalter 210 der in Fig. 2 dargestellten Pipette 200 ist als Zylinder ausgebildet, in dem der Kolben 266 geführt ist. Mittels der Kolbenstange 267 ist der Kolben 266 in dem Fluidkanal 211 des als Zylinder ausgebildeten Pipettierspitzenhalters 210 bewegbar.

Rein exemplarisch ist die Steuereinrichtung 250 elektrisch mit dem Kolben 266 verbunden, um die Bewegung des Kolbens 266 in dem Fluidkanal 211 zu steuern und/oder zu regeln.

Bei der in Fig. 2 dargestellten Pipette 200 weist die Durchflusssensoranordnung 240 einen Wegsensor 243 auf, der dem Kolben 266 zugeordnet ist. Der Wegsensor 243 ist dazu eingerichtet, ein Wegsignal zu erfassen, das von einer Position des Kolbens 266 in dem als Zylinder ausgebildeten Fluidkanal 211 abhängig ist.

Die Fig. 3 und 4 zeigen jeweils ein Detail einer Pipette 200, beispielsweise der in Fig. 1 dargestellten Pipette 200 oder der in Fig. 2 dargestellten Pipette 200. In den in den Fig. 3 und 4 dargestellten Details sind die Pipettierspitze 220 und ein in Bezug auf die Längsrichtung 400 vorderer Teil des Pipettierspitzenhalters 210 dargestellt. In der in Fig. 3 dargestellten Konfiguration ist weniger Probenflüssigkeit 270 in der Pipettierspitze 220 aufgenommen als in der in Fig. 4 dargestellten Konfiguration. Dementsprechend befindet sich bei der in Fig. 4 dargestellten Konfiguration mehr Probenflüssigkeit 270 und somit weniger Arbeitsfluid 280 in der Pipettierspitze 220 als bei der in Fig. 3 dargestellten Konfiguration.

Die Pipettierspitze 220 weist eine Außenhülle 223 auf, die den Innenbereich 224 umgibt. Die Pipettierspitze 220 weist ferner eine Dosieröffnung 221 auf, die beabstandet von dem Pipettierspitzenhalter 210 angeordnet ist. Zudem weist die Pipettierspitze 220 eine dem Pipettierspitzenhalter 210 zugewandte Arbeitsfluid-Öffnung 222 auf. Durch die Dosieröffnung 221 kann Probenflüssigkeit 270 treten, sodass diese dispensiert wird oder in den Innenbereich 224 der Pipettierspitze 220 aspiriert wird. Durch die Arbeitsfluid-Öffnung 222 kann Arbeitsfluid 280 treten, um in dem Innenbereich 224 einen Unterdruck zu erzeugen, sodass Probenflüssigkeit 270 aspiriert wird, oder um in dem Innenbereich 224 einen Überdruck zu erzeugen, sodass Probenflüssigkeit 270 dispensiert wird.

Der Pipettierspitzenhalter 210 weist eine erste Fluidkanalöffnung 212 auf, die der Pipettierspitze 220 zugewandt ist und durch die Arbeitsfluid 280 treten kann. Wird in dem Fluidkanal 211 (vgl. Fig. 1 und 2) ein Überdruck erzeugt, wird in dem Fluidkanal 211 aufgenommenes Arbeitsfluid 280 aus dem Fluidkanal 211 herausbewegt und tritt durch die erste Fluidkanalöffnung 212 in den Innenbereich 224 ein. Wird in dem Fluidkanal 211 (vgl. Fig. 1 und 2) ein Unterdruck erzeugt, wird in dem Innenbereich 224 aufgenommenes Arbeitsfluid 280 aus dem Innenbereich 224 herausbewegt und tritt durch die Arbeitsfluid-Öffnung 222 in den Fluidkanal 211 ein. Ist die Pipettierspitze 220 wie in den Fig. 3 und 4 dargestellt mit dem Pipettierspitzenhalter 210 gekoppelt, sind die erste Fluidkanalöffnung 212 des Fluidkanals 211 und die Arbeitsfluid-Öffnung 222 der Pipettierspitze 220 zumindest teilweise deckungsgleich angeordnet.

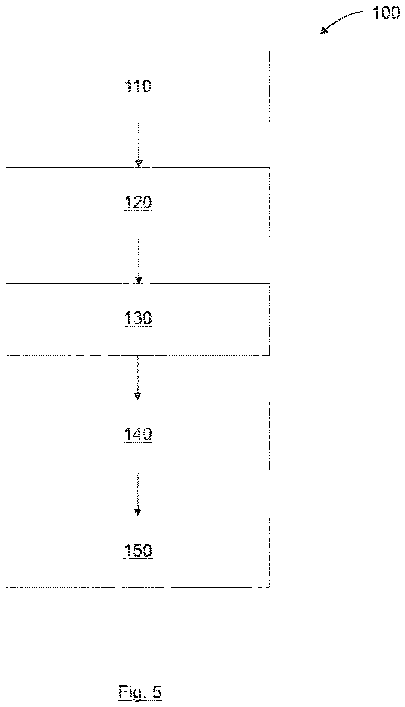

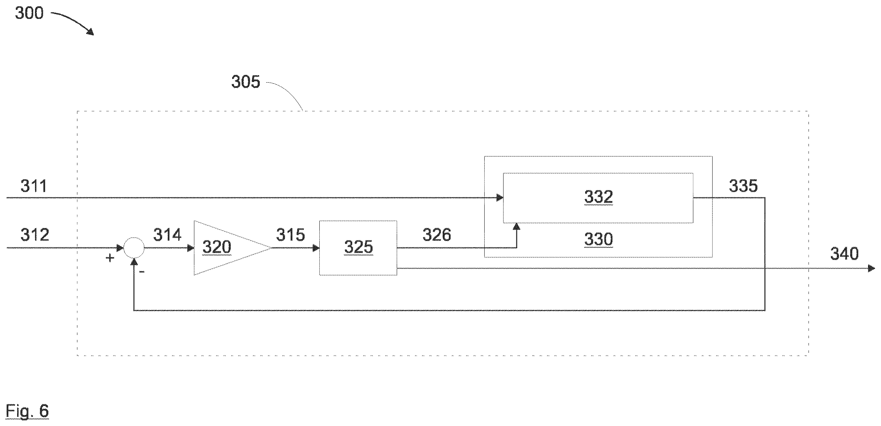

Fig. 5 zeigt ein Verfahren 100 zum Dosieren einer Probenflüssigkeit 270. Die Steuereinrichtung 250 der vorstehend beschriebenen Pipette(n) 200 ist dazu eingerichtet, das Verfahren 100 auszuführen. Das Verfahren 100 umfasst zumindest fünf aufeinanderfolgende Schritte 110, 120, 130, 140, 150, nämlich einen ersten Schritt 110, einen zweiten Schritt 120, einen dritten Schritt 130, einen vierten Schritt 140 und einen fünften Schritt 150. Bei dem ersten Schritt 110 wird ein Drucksignal des Spitzen-Drucksensors 230 mit der Steuereinrichtung 250 ausgewertet, um einen Arbeitsfluid-Druck 311 (vgl. Fig. 6) zu erhalten. Es folgt der zweite Schritt 120, bei dem ein Durchflusssignal der Durchflusssensoranordnung 240 mit der Steuereinrichtung 250 ausgewertet wird, um einen Probenflüssigkeits-Durchfluss 312 zu erhalten.

Danach folgt der dritte Schritt 130, bei dem ein Druck für im Pipettierspitzenhalter 210 aufgenommenes Arbeitsfluid 280 mit der Arbeitsfluideinrichtung 260 gemäß einem, insbesondere von der Steuereinrichtung 250 vorgegebenen, ersten Verlauf für den Arbeitsfluid-Druck 311 verändert wird, so dass Probenflüssigkeit 270 durch die von dem Pipettierspitzenhalter 210 beabstandete Dosieröffnung 221 der Pipettierspitze 220 tritt. Danach folgt der vierte Schritt 140, bei dem ein Strömungswiderstandskennwert 340 (vgl. Fig. 6) für die Probenflüssigkeit 270 unter Berücksichtigung des Arbeitsfluid-Druckes 311 und des Probenflüssigkeits-Durchflusses 312 ermittelt wird. Schließlich folgt der fünfte Schritt 150, bei dem der Druck für im Pipettierspitzenhalter 210 aufgenommenes Arbeitsfluid 280 mit der Arbeitsfluideinrichtung 260 gemäß einem, insbesondere von der Steuereinrichtung 250 vorgegebenen, zweiten Verlauf für den Arbeitsfluid-Druck 311 erneut verändert wird, wobei der zweite Verlauf für den Arbeitsfluid-Druck 311 unter Berücksichtigung des Strömungswiderstandskennwertes 340 ermittelt wird, so dass eine vorgegebene Probenflüssigkeitsmenge durch die Dosieröffnung 221 tritt.

Fig. 6 zeigt einen modellbasierten Beobachter 300. Rein exemplarisch wird der modellbasierte Beobachter 300 beim vierten Schritt 140 des in Fig. 5 dargestellten Verfahrens 100 angewandt. Mit dem modellbasierten Beobachter 300 kann der Strömungswiderstandskennwert 340 ermittelt werden. Der modellbasierte Beobachter 300 umfasst eine simulierte Regelung 305. Ferner exemplarisch werden der Arbeitsfluid-Druck 311 und der Probenflüssigkeits-Durchfluss 312 als Führungsgrößen für die simulierte Regelung 305 verwendet. Der Arbeitsfluid-Druck 311 und der Probenflüssigkeits-Durchfluss 312 werden einem Parametermodell 332 zugeführt, das in einer Simulation 330 verwendet wird.

Mit der Simulation 330 wird ein simulierter Probenflüssigkeits-Durchfluss 335 ermittelt, der als eine Regelgröße verwendet wird. In dem in der Simulation 330 verwendeten Parametermodell 332 sind mehrere physikalische Eigenschaften beziehungsweise Effekte mit Bezug zu der Probenflüssigkeit 270 zusammengefasst, insbesondere solche aus der Gruppe: kinematische Viskosität der Probenflüssigkeit 270, Dichte der Probenflüssigkeit 270, Innenquerschnitt der Pipettierspitze 220 und Verlauf eines Innenquerschnittes der Pipettierspitze 220.

Gleichzeitig wird der simulierte Probenflüssigkeits-Durchfluss 335 als eine Messgröße verwendet und zu dem Probenflüssigkeits-Durchfluss 312 rückgeführt. Hierbei wird eine Regelabweichung 314 als Differenz zwischen dem Probenflüssigkeits-Durchfluss 312 und dem simulierten Probenflüssigkeits-Durchfluss 335 ermittelt. Die Regelabweichung 314 wird einem Regler 320 der simulierten Regelung 305 zugeführt und mit diesem gemäß einer Verstärkungsfunktion verstärkt. Anschließend wird ein von dem Regler 320 ausgegebener Reglerausgang 315 einem Störmodell 325 der simulierten Regelung 305 zugeführt. Das Störmodell 325 der simulierten Regelung 305 ist als Funktion ausgebildet, mit der ein Vorab-Strömungswiderstandskennwert 326 ermittelt wird. Rein exemplarisch weist das Störmodell 325 einen Integrator auf, mit dem der Vorab-Strömungswiderstandskennwert 326 als ein Zeitintegral des Reglerausgangs 315 ausgegeben wird. Insbesondere werden mit dem Störmodell 325 die kinematische Viskosität der Probenflüssigkeit, die Dichte der Probenflüssigkeit und/oder geometrische Eigenschaften der Pipettierspitze 220 als Störgrößen abgebildet.

Der Vorab-Strömungswiderstandskennwert 326 wird als ein Parameter der simulierten Regelung 305 verwendet. Der Arbeitsfluid-Druck 311 wird der Simulation 330 als eine Eingangsgröße zugeführt. Rein exemplarisch wird der Vorab-Strömungswiderstandskennwert 326 außerdem als Strömungswiderstandskennwert 340 ausgegeben.

Insbesondere wird der Vorab-Strömungswiderstandskennwert 326 als veränderlicher Parameter der simulierten Regelung 305 verwendet. Veränderlicher Parameter bedeutet in diesem Zusammenhang, dass der Vorab-Strömungswiderstandskennwert 326 zwar als Parameter dem Parametermodell 332 zugeführt wird, wobei Parameter hierbei bedeutet, dass der Vorab-Strömungswiderstandskennwert 326 konstant ist. Aufgrund der Rückkopplung des simulierten Probenflüssigkeits-Durchflusses 335 mit dem messtechnisch erhaltenen Probenflüssigkeits-Durchfluss 312, die zu der dem Regler 320 zugeführten Regelabweichung 314 führt, wird der Vorab-Strömungswiderstandskennwert 326 jedoch trotzdem jedenfalls mittelbar verändert. Das heißt in Bezug auf den simulativen Anteil der simulierten Regelung 305 ist der Vorab-Strömungswiderstandskennwert 326 ein Parameter und in Bezug auf den realen Anteil der simulierten Regelung 305 ist der Vorab-Strömungswiderstandskennwert 326 veränderlich.

## Patentansprüche

1. Verfahren (100) zum Dosieren einer Probenflüssigkeit (270), mit einer Pipette (200), die eine Arbeitsfluideinrichtung (260), eine Durchflusssensoranordnung (240), einen Pipettierspitzenhalter (210), eine mit Probenflüssigkeit (270) befüllbare Pipettierspitze (220), einen am Pipettierspitzenhalter (210) angeordneten Spitzen-Drucksensor (230) und eine Steuereinrichtung (250) umfasst, mit den Schritten:
Auswerten eines Drucksignals des Spitzen-Drucksensors (230) mit der Steuereinrichtung (250), um einen Arbeitsfluid-Druck (311) zu erhalten,
Auswerten eines Durchflusssignals der Durchflusssensoranordnung (240) mit der Steuereinrichtung (250), um einen Probenflüssigkeits-Durchfluss (312) zu erhalten,
Verändern eines Druckes für im Pipettierspitzenhalter (210) aufgenommenes Arbeitsfluid (280) mit der Arbeitsfluideinrichtung (260) gemäß einem, insbesondere von der Steuereinrichtung (250) vorgegebenen, ersten Verlauf für den Arbeitsfluid-Druck (311), so dass Probenflüssigkeit (270) durch eine von dem Pipettierspitzenhalter (210) beabstandete Dosieröffnung (221) der Pipettierspitze (220) tritt,
Ermitteln eines Strömungswiderstandskennwertes (340) für die Probenflüssigkeit (270) unter Berücksichtigung des Arbeitsfluid-Druckes (311) und des Probenflüssigkeits-Durchflusses (312), und anschließend
erneutes Verändern des Druckes für im Pipettierspitzenhalter (210) aufgenommenes Arbeitsfluid (280) mit der Arbeitsfluideinrichtung (260) gemäß einem, insbesondere von der Steuereinrichtung (250) vorgegebenen, zweiten Verlauf für den Arbeitsfluid-Druck (311), wobei der zweite Verlauf für den Arbeitsfluid-Druck (311) unter Berücksichtigung des Strömungswiderstandskennwertes (340) ermittelt wird, so dass eine vorgegebene Probenflüssigkeitsmenge durch die Dosieröffnung (221) tritt.

2. Verfahren (100) nach Anspruch 1, **dadurch gekennzeichnet, dass** das erneute Verändern des Druckes für das im Pipettierspitzenhalter (210) aufgenommene Arbeitsfluid (280) geregelt erfolgt.

3. Verfahren (100) nach einem der vorhergehenden Ansprüche, **dadurch gekennzeichnet, dass** die Durchflusssensoranordnung (240) als Softsensor-Anordnung ausgebildet ist und das Durchflusssignal auf Grundlage zumindest eines Drucksignals eines der Arbeitsfluideinrichtung (260) zugeordneten Drucksensors ermittelt.

4. Verfahren (100) nach Anspruch 3, **dadurch gekennzeichnet, dass** die Arbeitsfluideinrichtung (260) eine Überdruckquelle (261) und/oder eine Unterdruckquelle (262) aufweist, wobei ein der Überdruckquelle (261) zugeordneter Überdrucksensor (241) und/oder ein der Unterdruckquelle (262) zugeordneter Unterdrucksensor (242) vorgesehen sind, wobei die Durchflusssensoranordnung (240) das Durchflusssignal auf Grundlage eines Drucksignals des Überdrucksensors (241) und/oder eines Drucksignals des Unterdrucksensors (242) und des Drucksignals des Spitzen-Drucksensors (230) ermittelt.

5. Verfahren (100) nach einem der Ansprüche 1 bis 3, **dadurch gekennzeichnet, dass** die Arbeitsfluideinrichtung (260) einen Kolben (266) aufweist und der Pipettierspitzenhalter (210) als Zylinder (268) ausgebildet ist, in dem der Kolben (266) geführt ist, wobei die Durchflusssensoranordnung (240) als Softsensor-Anordnung ausgebildet ist und das Durchflusssignal auf Grundlage eines Wegsignals eines dem Kolben (266) zugeordneten Wegsensors (243) und des Drucksignals des Spitzen-Drucksensors (230) ermittelt.

6. Verfahren (100) nach einem der vorhergehenden Ansprüche, **dadurch gekennzeichnet, dass** bei dem Ermitteln des Strömungswiderstandskennwertes (340) eine simulierte Regelung (305) durchgeführt wird, bei der der Arbeitsfluid-Druck (311) als Eingang und der Probenflüssigkeits-Durchfluss (312) als Führungsgröße verwendet werden und mittels einer Simulation ein simulierter Probenflüssigkeits-Durchfluss (335) ermittelt wird, wobei der simulierte Probenflüssigkeits-Durchfluss (335) als eine Regelgröße der simulierten Regelung (305) verwendet wird.

7. Verfahren (100) nach Anspruch 6, **dadurch gekennzeichnet, dass** der Probenflüssigkeits-Durchfluss (312) als eine Führungsgröße der simulierten Regelung (305) verwendet wird, wobei der simulierte Probenflüssigkeits-Durchfluss (335) als eine Messgröße der simulierten Regelung verwendet wird, die zu dem als eine Führungsgröße der simulierten Regelung (305) verwendeten Probenflüssigkeits-Durchfluss (312) rückgeführt wird.

8. Verfahren (100) nach Anspruch 7, **dadurch gekennzeichnet, dass** eine Regelabweichung (314) der simulierten Regelung (305) als eine Differenz zwischen dem als eine Führungsgröße der simulierten Regelung verwendeten Probenflüssigkeits-Durchfluss (312) und dem als eine Messgröße der simulierten Regelung verwendeten simulierten Probenflüssigkeits-Durchfluss (335) ermittelt wird, wobei die Regelabweichung (314) der simulierten Regelung (305) einem Störmodell (325) der simulierten Regelung (305) zugeführt wird, wobei das Störmodell (325) der simulierten Regelung (305) als Funktion ausgebildet ist, mit der ein Vorab-Strömungswiderstandskennwert (326) ermittelt wird, wobei der Vorab-Strömungswiderstandskennwert (326) als ein Parameter der simulierten Regelung (305) verwendet wird, wobei vorzugsweise der Arbeitsfluid-Druck (311) der Simulation (330) als eine Eingangsgröße zugeführt wird.

9. Pipette (200) zum Dosieren einer Probenflüssigkeit (270), mit einer Arbeitsfluideinrichtung (260), einer Durchflusssensoranordnung (240), einem Pipettierspitzenhalter (210), einer mit Probenflüssigkeit (270) befüllbaren Pipettierspitze (220), einem am Pipettierspitzenhalter (210) angeordneten Spitzen-Drucksensor (230) und einer Steuereinrichtung (250), wobei die Steuereinrichtung (250) dazu eingerichtet ist, ein Verfahren (100) nach einem der vorhergehenden Ansprüche auszuführen.
